# EUROPEAN PATENT APPLICATION

(11) **EP 4 810 900 A1**
(43) Date of publication of application: **23.09.2026**
(21) Application number: 24891491.3
(22) Date of filing: 15.11.2024
(51) Int. Cl.: G01B 11/24

(54) **BENT-SHAPE MEASUREMENT METHOD, BENT-SHAPE MEASUREMENT PROGRAM, AND BENT-SHAPE MEASUREMENT DEVICE**

(30) Priority: 15.11.2023 JP 2023194528
(71) Applicant: NHK Spring Co., Ltd., Yokohama-shi, Kanagawa 236-0004 (JP)
(72) Inventor: ARAI, Fumitaka, Yokohama-shi, Kanagawa 236-0004 (JP); MORI, Yukiya, Yokohama-shi, Kanagawa 236-0004 (JP); TADANO, Atsuya, Yokohama-shi, Kanagawa 236-0004 (JP)
(74) Representative: Hoffmann Eitle
(86) International application number: PCT/JP2024/040581
(87) International publication number: WO 2025/105456

(57) **Abstract**

A bent shape measurement method according to the present invention is a bent shape measurement method of measuring a shape of a formed material that has been subjected to bending, and includes: a data acquisition step of acquiring profile data generated by imaging a part of a side surface of the formed material; a detection step of detecting, for each of a plurality of areas set for the formed material, a straight portion by using the profile data, the straight portion extending linearly; a calculation step of calculating an intersection point between two straight portions in each area; and a conversion step of performing conversion to a set value based on coordinates of the intersection point in each area.

## Description

### Field

The present invention relates to a bent shape measurement method, a bent shape measurement program, and a bent shape measurement apparatus.

### Background

Stabilizers used in vehicles, for example, are mounted on the vehicles to stabilize postures of the vehicles. Stabilizers are manufactured by subjecting bar-shaped members to bending. In this bending, for example, a member that has been subjected to bending is placed in a form gauge, a clearance in the gauge is determined visually, and bending conditions are set based on this determination. In a disclosed technique to improve accuracy of such measurement of a shape, a three-dimensional structure is imaged and whether or not a shape after bending is within a tolerance range is determined by a comparison between imaged data and design data (see, for example, Patent Literature 1).

### Citation List

### Patent Literature

Patent Literature 1: Japanese Unexamined Patent Application Publication No. H9-184712

### Summary

### Technical Problem

However, Patent Literature 1 has a problem that imaging of a three-dimensional structure, for example, is time-consuming.

The present invention has been made in view of the above and an object thereof is to provide a bent shape measurement method, a bent shape measurement program, and a bent shape measurement apparatus that enable short-time acquisition of a shape after bending.

### Solution to Problem

To solve the above-described problem and achieve the object, a bent shape measurement method according to the present invention measures a shape of a formed material that has been subjected to bending, and includes: a data acquisition step of acquiring profile data generated by imaging a part of a side surface of the formed material; a detection step of detecting, for each of a plurality of areas set for the formed material, a straight portion of the formed material by using the profile data, the straight portion extending linearly; a calculation step of calculating an intersection point between two straight portions in each area; and a conversion step of performing conversion to a set value based on coordinates of the intersection point in each area.

Moreover, in the above-described bent shape measurement method according to the present invention, the conversion step includes converting a value of a bent shape of the formed material to the set value based on coordinates of a bending intersection point, the bent shape being represented by the coordinates.

Moreover, in the above-described bent shape measurement method according to the present invention, a correction value is calculated based on a difference between the set value after the conversion and a set value that has been set beforehand.

Moreover, in the above-described bent shape measurement method according to the present invention, the detection step includes updating a detection result for the straight portion by changing a detection position for the straight portion and repeating the detecting.

Moreover, the above-described bent shape measurement method according to the present invention further includes a synthesis step of synthesizing profile data of respective areas.

Moreover, a bent shape measurement program according to the present invention measures a shape of a formed material that has been subjected to bending, and the shape measurement program causes a computer to execute: a data acquisition step of acquiring profile data generated by imaging a part of a side surface of the formed material; a detection step of detecting, for each of a plurality of areas set for the formed material, a straight portion of the formed material by using the profile data, the straight portion extending linearly; a calculation step of calculating an intersection point between two straight portions in each area; and a conversion step of performing conversion to a set value based on coordinates of the intersection point in each area.

Moreover, a bent shape measurement apparatus according to the present invention measures a shape of a formed material that has been subjected to bending, and includes: a data acquisition unit configured to acquire profile data generated by imaging a part of a side surface of the formed material; a detection unit configured to detect, for each of a plurality of areas set for the formed material, a straight portion of the formed material by using the profile data, the straight portion extending linearly; a calculation unit configured to calculate an intersection point between two straight portions in each area; and a conversion unit configured to perform conversion to a set value based on coordinates of the intersection point in each area.

### Advantageous Effects of Invention

The present invention has an effect of enabling short-time acquisition of a shape after bending.

### Brief Description of Drawings

[FIG. 1] FIG. 1 is a diagram illustrating an example of a configuration of a stabilizer.
[FIG. 2] FIG. 2 is a block diagram illustrating a schematic configuration of a shape measurement apparatus according to an embodiment of the present invention.
[FIG. 3] FIG. 3 is a flowchart illustrating a flow of a shape measurement process performed by the shape measurement apparatus according to the embodiment of the present invention.
[FIG. 4] FIG. 4 is a diagram for illustration of an imaging process for a member that has been subjected to bending.
[FIG. 5] FIG. 5 is a diagram illustrating an example of profile data.
[FIG. 6] FIG. 6 is a diagram for illustration of area setting for imaged data of the member that has been subjected to bending.
[FIG. 7] FIG. 7 is a diagram (No. 1) for illustration of detection of straight portions.
[FIG. 8] FIG. 8 is a diagram (No. 2) for illustration of the detection of the straight portions.
[FIG. 9] FIG. 9 is a diagram for illustration of calculation of an intersection point between straight lines.
[FIG. 10] FIG. 10 is a diagram for illustration of resetting of a detection position.
[FIG. 11] FIG. 11 is a flowchart illustrating a flow of a shape measurement process performed by a shape measurement apparatus, according to a modified example of the embodiment of the present invention.

### Description of Embodiments

An embodiment for implementing the present invention (hereinafter, referred to as the "embodiment") will hereinafter be described by reference to the appended drawings. The drawings are schematic, a relation between a thickness and a width of each portion and ratios among thicknesses of respective portions may be different from the actual relation and ratios, and the drawings may also include a portion that differs in its dimensional relations or ratios among the drawings.

### (Embodiment)

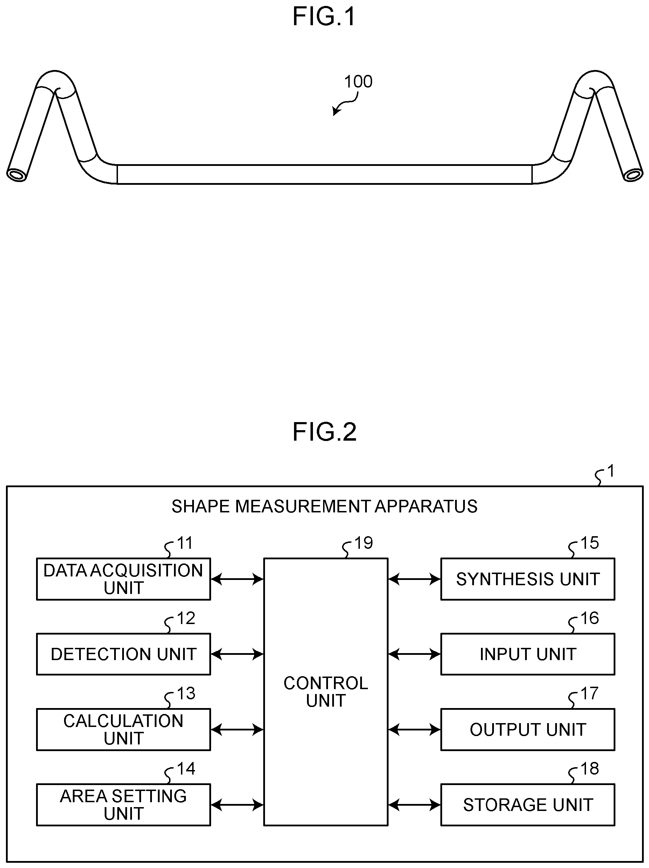

FIG. 1 is a diagram illustrating an example of a configuration of a stabilizer. For a stabilizer 100, a solid or hollow cylindrical member made of metal or fibers (for example, carbon fibers) is used. FIG. 1 illustrates an example of a stabilizer manufactured using a hollow member. The stabilizer 100 is manufactured by subjecting both end portions of the cylindrical member to bending.

In the following description, the member that has been bent (the formed material) may be referred to as the formed material 100.

FIG. 2 is a block diagram illustrating a schematic configuration of a shape measurement apparatus according to an embodiment of the present invention. A shape measurement apparatus 1 illustrated in FIG. 1 is an apparatus for measuring a shape of a formed material. The shape measurement apparatus 1 has a data acquisition unit 11, a detection unit 12, a calculation unit 13, an area setting unit 14, an input unit 16, an output unit 17, a storage unit 18, and a control unit 19.

The data acquisition unit 11 acquires shape data of the formed material. In this embodiment, the shape data are profile data acquired by imaging the formed material.

The detection unit 12 detects straight portions in the formed material. The detection unit 12 detects, from set areas in the profile data, positions corresponding to straight portions extending linearly in design data of the formed material, the design data having been set beforehand.

The profile data of the formed material have, set therein, a plurality of areas different from one another and including all of the formed material.

The calculation unit 13 calculates, for a plurality of straight portions detected by the detection unit 12, intersection points between straight portions that are adjacent to (continuous with) each other via a bent portion in the design.

For the profile data, the area setting unit 14 sets an area for which bending intersection point coordinates are calculated, and resets a detection area targeted by the detection unit 12 by using an intersection point calculated by the calculation unit 13.

A synthesis unit 15 synthesizes the profile data of the formed material in the respective areas. Coordinates of bending intersection points of the entire formed material are set by this synthesis.

The input unit 16 receives input of various signals related to operation of the shape measurement apparatus 1. The input unit 16 is configured using a keyboard, a mouse, a switch, and/or a touch panel, for example.

Under control of the control unit 19, the output unit 17 causes an image to be displayed or causes sound or light to be output. The output unit 17 is configured using a display, a speaker, and/or a light source, for example.

The storage unit 18 stores, for example, a program (for example, a shape measurement program described later) for the control unit 19 to execute various operation. The storage unit 18 is configured using a volatile memory or a non-volatile memory, or is configured by combining a volatile memory and a non-volatile memory. For example, the storage unit 18 is configured using a random access memory (RAM) and/or a read only memory (ROM).

The control unit 19 controls operation and processing of each component of the shape measurement apparatus 1. The control unit 19 causes each unit to execute processing in response to, for example, input of an instruction to start a shape measurement process via the input unit 16.

The detection unit 12, the calculation unit 13, the area setting unit 14, the synthesis unit 15, and the control unit 19 are each configured using a processor, such as a central processing unit (CPU), or a processor that is any one of various arithmetic circuits that execute specific functions, such as an application specific integrated circuit (ASIC).

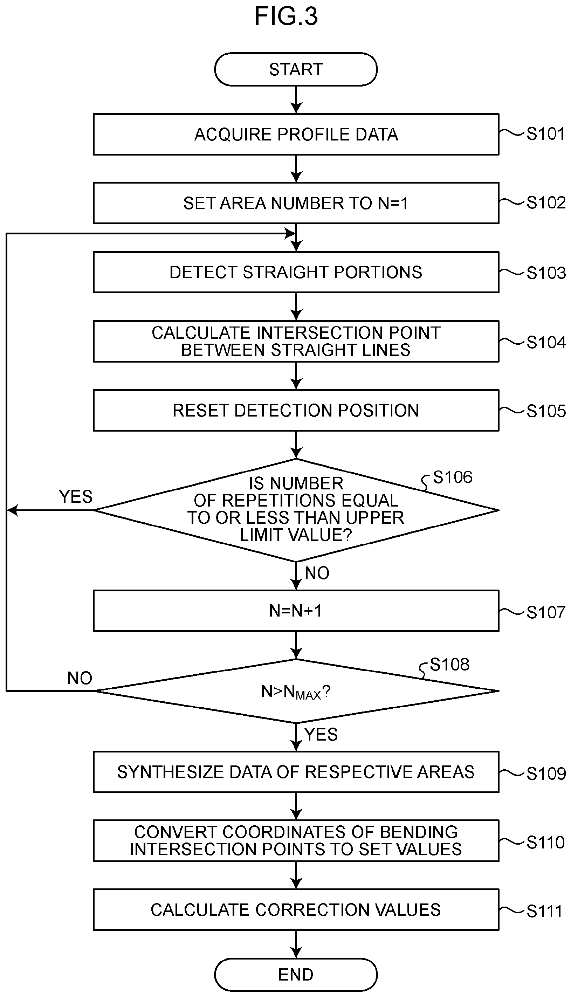

The shape measurement process will be described next by reference to FIG. 3 to FIG. 9. FIG. 3 is a flowchart illustrating a flow of the shape measurement process performed by the shape measurement apparatus according to the embodiment of the present invention. The control unit 19 causes each unit to execute processing in response to, for example, input of an instruction to start the shape measurement process via the input unit 16.

The following description is given on the assumption that in the profile data of the formed material, the plurality of areas have been set beforehand correspondingly to the design data, and numbers (1, 2, ..., N_{MAX}) have been assigned to the respective areas.

Firstly, the control unit 19 acquires the profile data (Step S101). The control unit 19 causes the data acquisition unit 11 to acquire the profile data of the formed material, for which coordinates of bending intersection points are to be calculated.

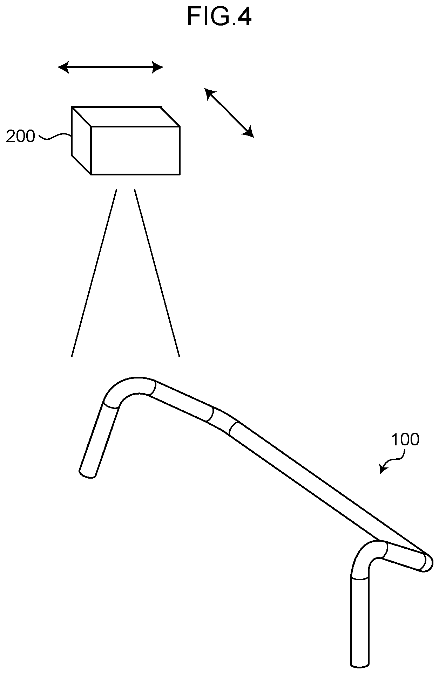

FIG. 4 is a diagram for illustration of an imaging process for a member that has been subjected to bending. As to the profile data, imaging of the formed material 100 is performed while moving an imaging member 200 relatively to the formed material 100 and a plurality of images that constitute an entirety of the formed material 100 are acquired. The imaging member 200 is configured using, for example, a position sensitive detector (PSD), a charge coupled device (CCD) image sensor, or a complementary metal oxide semiconductor (CMOS) image sensor.

In an example described with respect to this embodiment, the imaging member 200 is movable in two directions orthogonal to each other and moves on a plane orthogonal to an optical axis of the imaging member 200. Therefore, the profile data correspond to those acquired by imaging the formed material 100 from one direction.

The imaging member 200 may be configured to be movable in a three-dimensional space and to image the entire circumference of the formed material 100.

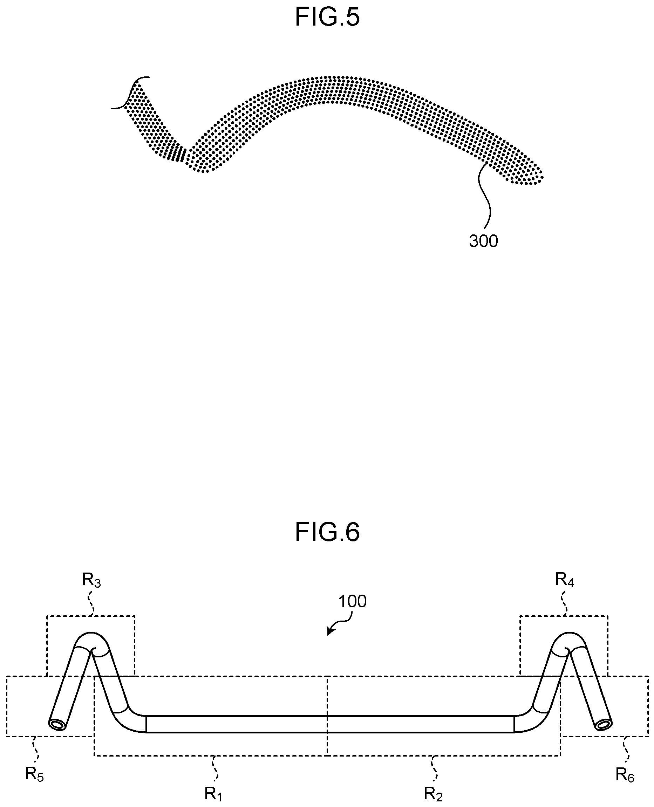

FIG. 5 is a diagram illustrating an example of the profile data. FIG. 5 is a diagram illustrating part of the profile data. The profile data are a point cloud data representing a side surface of the formed material 100, the side surface being toward the imaging member 200, as illustrated in FIG. 5.

The area setting unit 14 sets the number N of the area to N = 1 (Step S102).

The areas in the profile data will now be described by reference to FIG. 6. FIG. 6 is a diagram for illustration of area setting for imaged data of a member that has been subjected to bending. For the formed material 100, the design data have, set therein, a plurality of areas R₁ to R₆ set along the stretching direction of the formed material 100. The area R₁ is located in a central portion in the stretching direction of the formed material 100 and includes a central straight portion in the longitudinal direction of the formed material 100 and one of bent portions continuous with a straight portion. The area R₂ is located in the central portion in the stretching direction of the formed material 100 and includes a central straight portion in the longitudinal direction of the formed material 100 and the other one of the bent portions continuous with the straight portion. The area R₃ is adjacent to the area R₁ along the stretching direction of the formed material 100 and includes one bent portion. The area R₄ is adjacent to the area R₂ along the stretching direction of the formed material 100 and includes one bent portion. The area R₅ is adjacent to the area R₃ along the stretching direction of the formed material 100 and includes one of end portions of the formed material 100. The area R₆ is adjacent to the area R₄ along the stretching direction of the formed material 100 and includes one of the end portions of the formed material 100. Adjacent areas may partially overlap.

As illustrated in FIG. 3, the detection unit 12 detects straight portions from the N-th area (step S103). The detection unit 12 reads the design data from the storage unit 18 or an external server, refers to the design data that have been read, associates the area with a position (coordinates) in the profile data, and detects straight portions in the area.

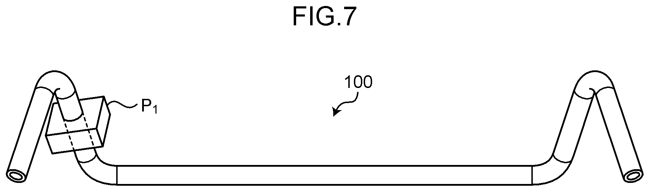

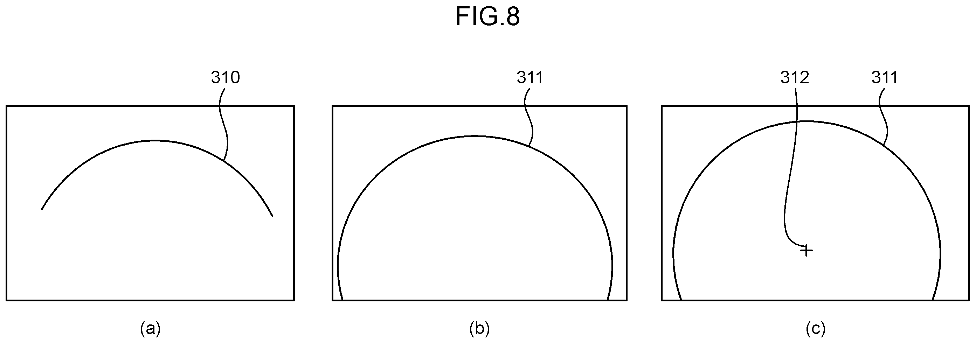

FIG. 7 and FIG. 8 are diagrams for illustration of detection of straight portions. As illustrated in FIG. 7, in a case where a position P₁ has been set as a straight portion of the formed material 100 in a detection area for bending intersection point coordinates, the detection unit 12 performs detection of a straight portion at the position P₁. This position P₁ is set based on the design data and is a position estimated to correspond to a straight portion for the profile data of the formed material 100. Furthermore, for the position P₁, coordinates of a representative point may be set or coordinates of a centroid position of the formed material 100 included in the position P₁ may be set from the profile data of the formed material 100, or the position P₁ may be set as a space through which a straight portion can pass. At least two such set positions are set with a bent portion interposed therebetween, for each area.

From point cloud data representing a surface of the formed material 100, the detection unit 12 extracts point cloud data 310 for one circumferential direction (see (a) in FIG. 8). Thereafter, the detection unit 12 generates a circle 311 that fits the point cloud data 310 (see (b) in FIG. 8). In a case where part of the point cloud data 310 deviates due to, for example, measurement errors and the circle 311 does not completely fit the point cloud data 310, a circle that passes through the largest number of points is selected as the circle 311. Design values may be adopted for some of points of the circle 311.

After the circle 311 is generated, the detection unit 12 sets coordinates of the center 312 of the circle 311 (see (c) in FIG. 8).

The detection unit 12 sets coordinates of the centers for point cloud data for a plurality of circumferential directions different from one another, for the position P₁. Thereafter, by using the set coordinates of the plurality of centers, the detection unit 12 calculates an approximated line (approximated center line). A straight portion of the formed material 100 is thereby detected.

As illustrated in FIG. 3, after the straight portions are detected, the calculation unit 13 calculates an intersection point between straight lines (approximated center lines) corresponding to the straight portions of the formed material 100 (Step S104). The calculation unit 13 calculates coordinates of the intersection point between the approximated center lines generated for the area.

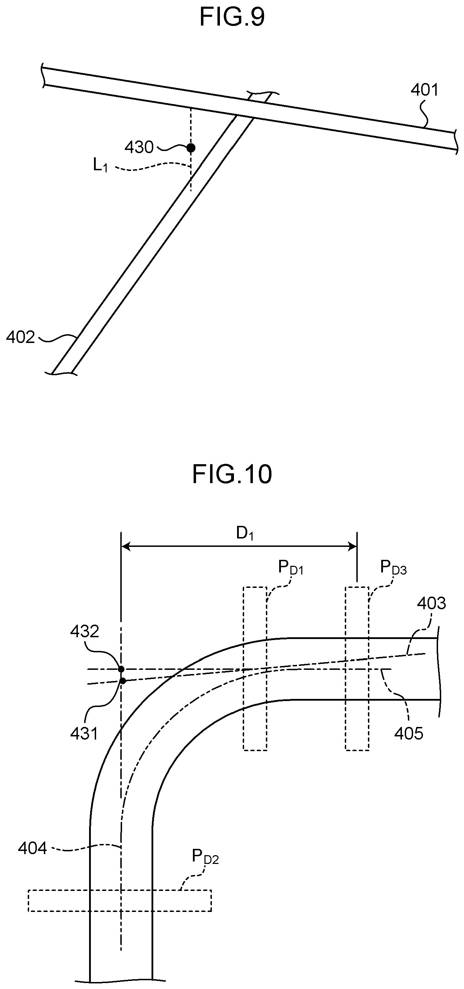

FIG. 9 is a diagram for illustration of calculation of an intersection point between straight lines. As illustrated in FIG. 9, in a case where approximated center lines 401 and 402 do not intersect each other, the calculation unit 13 calculates a line segment L₁ joining the approximated center lines 401 and 402 at the shortest distance and regards a midpoint 430 of the line segment L₁ as coordinates of an intersection point.

As illustrated in FIG. 3, after the intersection point is calculated, the detection unit 12 performs resetting of a detection position (Step S105). The detection unit 12 resets a position moved from the intersection point calculated by the calculation unit 13 by a predetermined value, as a straight portion detection position. In this resetting, the detection unit 12 moves the detection position in a direction away from the bent portion by the predetermined value along the approximated center line. By this movement of the detection position, a plurality of intersection points are calculated for one bent position.

Thereafter, the control unit 19 determines whether or not the number of repetitions of intersection point calculation in the N-th area is equal to or less than an upper limit value (Step S106). In a case where the control unit 19 determines that the number of repetitions is more than the upper limit value (Step S106: No), the control unit 19 proceeds to Step S107. On the contrary, in a case where the control unit 19 determines that the number of repetitions is equal to or less than the upper limit value (Step S106: Yes), the control unit 19 proceeds to Step S103, repeats a detection process for straight portions at the reset position, and updates the detection result. This repetition of the straight portion detection increases accuracy of detection of straight portions. In the determination, the upper limit value is set based on, for example, detection accuracy derived from past performance results.

In this embodiment, the intersection point calculated lastly through the repetition is adopted as the intersection point (bending intersection point) in the N-th area, but the intersection point may be, for example, an intersection point calculated when the setting was performed at any turn in the repetition order, or may be the centroid of a shape passing through a plurality of intersection points that have been calculated.

The repetitive processing in step S106 may be omitted.

Furthermore, for the areas R₅ and R₆ that do not include any bent portion, the processing of Steps S103 to S106 is omitted.

Resetting of a detection position will now be described by reference to FIG. 10. FIG. 10 is a diagram for illustration of resetting of a detection position. Firstly, as detection positions, a first detection position P_{D1} and a second detection position P_{D2} opposite to each other are set, with a bent portion interposed therebetween. For example, at Step S104, the calculation unit 13 respectively calculates approximated center lines 403 and 404 for the first detection position P_{D1} and the second detection position P_{D2} and finds an intersection point 431 therebetween. Thereafter, the calculation unit 13 performs resetting of the position of the first detection position P_{D1}. In this resetting, the calculation unit 13 resets the first detection position to a first detection position P_{D3} that is at a position away from the approximated center line 404 for the second detection position P_{D2} by a predetermined value D₁. This predetermined value D₁ is preferably equal to or larger than the bending radius of the bent portion for movement toward the straight portion from the bent portion.

After detecting an intersection point by resetting the first detection position, the second detection position is moved by a predetermined value with reference to the approximated center line for the first detection position.

Furthermore, the predetermined value may be increased according to the number of repetitions.

As illustrated in FIG. 3, the control unit 19 increments N by 1 at Step S107. Thereafter, the control unit 19 determines whether or not N is more than N_{MAX} (Step S108). In a case where the control unit 19 determines that N is equal to or less than N_{MAX} (Step S108: No), the control unit 19 proceeds to Step S103 and repeats the above described processing for the incremented N-th turn. On the contrary, in a case where the control unit 19 determines that N is more than N_{MAX} (Step S108: Yes), the control unit 19 proceeds to Step S109.

At Step S109, the synthesis unit 15 synthesizes the profile data of the formed material in the respective areas. By this synthesis, coordinates of bending intersection points of the entire formed material are set. The synthesis unit 15 synthesizes the data of the respective areas by associating reference blocks in an area with each other, associating areas with each other based on encoder values, associating reference patterns provided on a measurement stage with each other, and/or associating feature points of the imaged target with each other. A publicly known method may be adopted for the synthesis by the synthesis unit 15.

Thereafter, the calculation unit 13 performs conversion into set values using coordinates of bending intersection points (Step S110). The calculation unit 13 performs this conversion into the set values by, for example, inputting the coordinates of the bending intersection points into a formula that has been prepared beforehand. The design values are, for example, values corresponding to the design data.

By using the set values after the conversion and set values in the design data, the calculation unit 13 calculates correction values (Step S111). This correction values are, for example, values set as processing conditions set upon bending and are values that change the feed amount/velocity, bend angle, and twist angle.

After the calculation of the correction values, for example, the control unit 19 may cause the calculated correction values to be displayed by the output unit 17 or stored in the storage unit 18. Furthermore, the control unit 19 may transmit the correction values to a control unit of an apparatus that performs bending or cause the set values to be corrected automatically at the apparatus.

At Steps S110 and S111, the calculation unit 13 converts, for example, a plurality of reference coordinates representing drawing values on the design drawing at the bent positions of the formed material and a plurality of coordinates (measured coordinates) of bending intersection points that have been calculated, into set values based on values of the respective coordinates. In this conversion, one measured coordinate corresponds to each reference coordinate, and the calculation unit 13 calculates, for example, respective set values for each coordinate with respect to feed, twist, and bend.

Thereafter, the calculation unit 13 calculates differences between the set values for the reference coordinates and the set values for the measured coordinates corresponding thereto. Differences for each of feed, twist, and bend are thereby calculated for the bending. For example, these differences are set as correction values.

The set values are expressed for feed, twist, and bend based on relative positional relations between points adjacent to each other in the array direction. In this case, a coordinate transformation into the same space may be performed, as required.

In the above described embodiment, approximated center lines of two straight portions connected via a bent portion in the formed material 100 are respectively calculated, set values are calculated from coordinates of an intersection point between these approximated center lines, and correction values are calculated as differences from design data. The embodiment enables calculation of correction values by use of part of data of the formed material 100 and design data, without calculation of, for example, a bend angle of a bent portion from three-dimensional data, and thus enables short-time acquisition of shape after bending.

### (Modified Example)

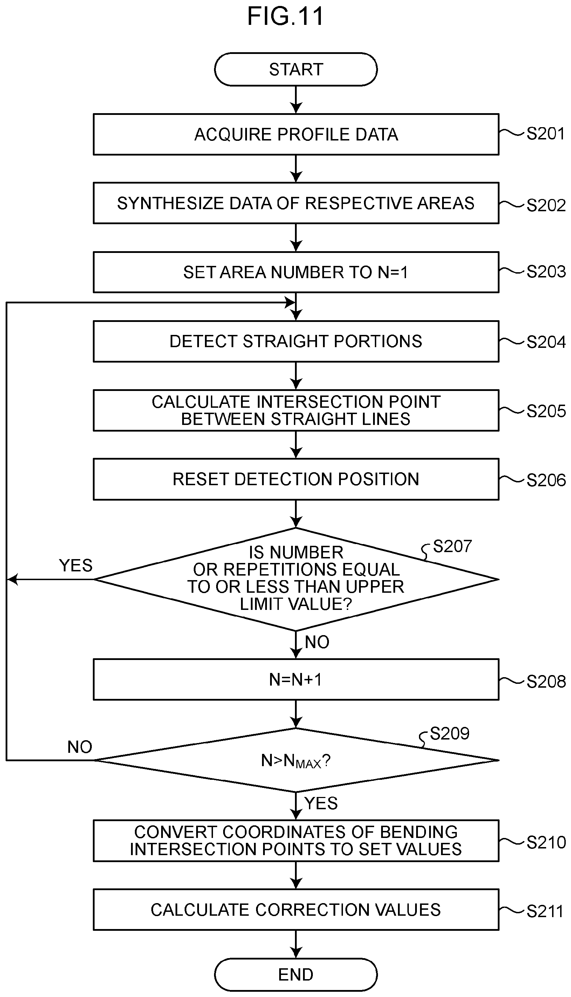

A modified example of the embodiment will be described next by reference to FIG. 11. An apparatus configuration of a shape measurement apparatus according to the modified example is the same as that of the embodiment, and description thereof will thus be omitted. Processing different from that of the embodiment will be described hereinafter. FIG. 11 is a flowchart illustrating a flow of a shape measurement process performed by the shape measurement apparatus according to the modified example.

For example, in response to input of an instruction to start the shape measurement process via the input unit 16, the control unit 19 causes each unit to execute processing. The control unit 19 acquires profile data, similarly to Step S101 (Step S201).

Thereafter, the synthesis unit 15 synthesizes the profile data of a formed material in each area (Step S202). By this synthesis, imaged data corresponding to the entire formed material are generated.

If a full image of the formed material 100 can be acquired in one instance of imaging, Step S202 may be omitted.

Thereafter, similarly to Steps S102 to S108, the control unit 19 detects straight portions and calculates coordinates of an intersection point between approximated center lines, for each area (Steps S203 to S209).

Thereafter, the calculation unit 13 performs conversion into set values using coordinates of bending intersection points (Step S210). The calculation unit 13 performs this conversion into the set values by, for example, inputting the coordinates of the bending intersection points into a formula that has been prepared beforehand. The set values are, for example, values corresponding to design data.

By using the set values after the conversion and the set values in the design data, the calculation unit 13 then calculates correction values (Step S211). The correction values are, for example, values set as processing conditions set upon bending and are values that change the feed amount/velocity, bend angle, and twist angle.

After the calculation of the correction values, for example, the control unit 19 may cause the calculated correction values to be displayed by the output unit 17 or stored in the storage unit 18. Furthermore, the control unit 19 may transmit the correction values to a control unit of an apparatus that performs bending or cause the set values to be corrected automatically at the apparatus.

In this modified example described above, similarly to the above described embodiment, approximated center lines of two straight portions connected via a bent portion in the formed material 100 are respectively calculated, set values are calculated from coordinates of an intersection point between these approximated center lines, and correction values are calculated as differences from design data. The modified example enables calculation of correction values by use of part of data of the formed material 100 and design data, without calculation of, for example, a bend angle of a bent portion from three-dimensional data, and thus enables short-time acquisition of a shape after bending.

An embodiment of the present invention has been described above, but the present invention is not to be limited to the above described embodiment.

Furthermore, a program to be executed by the shape measurement apparatus according to the embodiment is provided as file data in an installable format or executable format, by being recorded in a computer-readable recording medium, such as a CD-ROM, a flexible disk (FD), a CD-R, a digital versatile disk (DVD), a USB medium, or a flash memory.

Furthermore, the program to be executed by the shape measurement apparatus according to the embodiment may be configured to be provided by being stored in a computer connected to a network, such as the Internet, and being downloaded via the network.

Furthermore, the shape measurement apparatus according to the embodiment may be configured to transmit and receive information to and from an eternal terminal that functions as a server apparatus and that is connected via a network.

The present invention may thus include various embodiments not described herein, and various design changes, for example, may be made without departing from the technical ideas determined by the claims.

### Industrial Applicability

As described above, a bent shape measurement method, a bent shape measurement program, and a bent shape measurement apparatus, according to the present invention, are suitable for short-time acquisition of a shape after bending.

### Reference Signs List

- 1: SHAPE MEASUREMENT APPARATUS
- 11: DATA ACQUISITION UNIT
- 12: DETECTION UNIT
- 13: CALCULATION UNIT
- 14: AREA SETTING UNIT
- 15: SYNTHESIS UNIT
- 16: INPUT UNIT
- 17: OUTPUT UNIT
- 18: STORAGE UNIT
- 19: CONTROL UNIT
- 100: STABILIZER
- 200: IMAGING MEMBER

## Claims

1. A bent shape measurement method for measuring a shape of a formed material that has been subjected to bending, the bent shape measurement method comprising:
a data acquisition step of acquiring profile data generated by imaging a part of a side surface of the formed material;
a detection step of detecting, for each of a plurality of areas set for the formed material, a straight portion of the formed material by using the profile data, the straight portion extending linearly;
a calculation step of calculating an intersection point between two straight portions in each area; and
a conversion step of performing conversion to a set value based on coordinates of the intersection point in each area.

2. The bent shape measurement method according to claim 1, wherein the conversion step includes converting a value of a bent shape of the formed material to the set value based on coordinates of a bending intersection point, the bent shape being represented by the coordinates.

3. The bent shape measurement method according to claim 1, wherein a correction value is calculated based on a difference between the set value after the conversion and a set value that has been set beforehand.

4. The bent shape measurement method according to claim 1, wherein the detection step includes updating a detection result for the straight portion by changing a detection position for the straight portion and repeating the detecting.

5. The bent shape measurement method according to claim 1, further comprising a synthesis step of synthesizing profile data of respective areas.

6. A bent shape measurement program for measuring a shape of a formed material that has been subjected to bending, the shape measurement program causing a computer to execute:
a data acquisition step of acquiring profile data generated by imaging a part of a side surface of the formed material;
a detection step of detecting, for each of a plurality of areas set for the formed material, a straight portion of the formed material by using the profile data, the straight portion extending linearly;
a calculation step of calculating an intersection point between two straight portions in each area; and
a conversion step of performing conversion to a set value based on coordinates of the intersection point in each area.

7. A bent shape measurement apparatus for measuring a shape of a formed material that has been subjected to bending, the bent shape measurement apparatus comprising:
a data acquisition unit configured to acquire profile data generated by imaging a part of a side surface of the formed material;
a detection unit configured to detect, for each of a plurality of areas set for the formed material, a straight portion of the formed material by using the profile data, the straight portion extending linearly;
a calculation unit configured to calculate an intersection point between two straight portions in each area; and
a conversion unit configured to perform conversion to a set value based on coordinates of the intersection point in each area.
